# EUROPÄISCHE PATENTSCHRIFT

(11) **EP 1 031 274 B1**
(45) Veröffentlichungstag und Bekanntmachung des Hinweises auf die Patenterteilung: **29.10.2003**
(21) Anmeldenummer: 00102084.1
(22) Anmeldetag: 03.02.2000
(51) Int. Cl.: A01F 15/07, A01F 15/18

(54) **Walze für Erntemaschinen**
Roller for harvesting machine
Rouleau pour machine à récolter

(30) Priorität: 22.02.1999 DE 19907290
(43) Veröffentlichungstag der Anmeldung: 30.08.2000
(73) Patentinhaber: Usines Claas France, 57141 Metz (FR)
(72) Erfinder: Mornet, Nicolas, 57255 Sainte Marie aux Chênes (FR); Louyot, Benoit, 57420 Pagny les Goin (FR); Hawlas, Martin, 33428 Harsewinkel (DE)
(74) Vertreter: Kus, Sascha

(56) Entgegenhaltungen:
- FR-A- 2 749 129
- US-A- 4 198 804
- US-A- 4 580 395
- US-A- 4 850 183

## Beschreibung

Die Erfindung bezieht sich auf eine Walze für Erntemaschinen nach dem oberbegriff des Anspruchs 1 wie sie bereits aus US-A-4 580 395 bekannt ist.

Solche Walzen finden Verwendung als Preßwalzen in Rundballenpressen, sind aber auch bekannt als Vorpreßwalzen in Feldhäckslern oder Zuckerrohrerntemaschinen, als Corn-Crakkerwalzen in Feldhäckslern oder in vergleichbaren anderen Anwendungen. Als Anwendungsbeispiel wird nachstehend der Erfindungsgegenstand an einer Rundballenpresse erläutert. Es ist beispielsweise aus dem Firmenprospekt CLAAS "Rundballenpresse Rollant 66 46 46 ROTOCUT" mit dem Druckvermerk 8/98, Seite 9, bekannt, als Hohlzylinder ausgebildete Preßwalzen dadurch zu stabilisieren, daß im Walzeninneren mit Abstand zueinander Stützböden angeordnet werden, die sämtlich an ihrem Umfang durch Schweißungen mit dem Walzenmantel drehfest verbunden sind. Durch Überleitung eines Drehmoments von den Walzennaben in den Walzenmantel und Biegebeanspruchung ergeben sich Spannungen zwischen Walzenmantel und Umfangsbegrenzung der Stützböden dergestalt, daß die Schweißverbindungen zerstört, die Stützböden gelöst und dadurch die Walzen unbrauchbar werden. Solche Schäden treten insbesondere dann vermehrt auf, wenn auf den Walzen im Vergleich zu den bisher zufriedenstellenden herkömmlich verstärkten Walzen besonders hohe Lasten ruhen, die beispielsweise aus erhöhten Preßdrücken in neuen Rundballenpressen herrühren, die höhere Preßleistungen erzeugen. Hohe Lasten, die mittig und quasi punktförmig an einer Stelle auf eine Walze wirken, verursachen eine Durchbiegung der Walze. Wenn sich diese Walze im Betrieb unter Last dreht, unterliegen die Verbindungsstellen zwischen äußerem Walzenmantel und innenliegenden Stützböden Wechselbelastungen, die schließlich zu Sprödbrüchen der Verbindungsstelle führen können. Nach einem Bruch der Verbindung mit dem Walzenmantel können sich die Stützböden flachlegen und wandern. Die Walzen beulen sich ein und brechen. Hohe Reparaturkosten und Unterbrechungen im Maschineneinsatz sind die Folge solcher Walzenbrüche.

Aufgabe der Erfindung ist es, Walzen der gattungsgemäßen Art so auszubilden, daß sie eine erhöhte Festigkeit aufweisen bei weiterhin leichter Bauweise und Montagefreundlichkeit.

Die Aufgabe wird gelöst, indem mehrere der innenliegenden Stützböden durch zumindest einen Achsabschnitt miteinander verbunden und dadurch gegen seitliches Verschieben gesichert sind. Der Achsabschnitt fängt die seitlichen Biegekräfte, die auf einen einzelnen Stützboden wirken, auf und verteilt ihn auf nebenliegende, ebenfalls mit dem Achsabschnitt verbundene Stützböden. Durch eine solche Abstützung und Lastverteilung verringern sich die Spitzenlasten, die auf einzelene Stützböden wirken. Auch nimmt die lastwechselbedingte Mikrobewegung der Stützböden ab, dadurch wird die Gefahr von Sprödbrüchen kleiner.

Erfindungsgemäß kann es weiter vorteilhaft sein, mehrere der innenliegenden Stützböden nicht mit dem Walzenmantel drehfest zu verbinden. Die auch bei einer Achsverbindung von Stützböden immer noch auftretenden Mikrobewegungen eines Stützbodens relativ zum Walzenmantel wird auf diese Weise nicht an der Schweißstelle verhindert, sondern zugelassen. Dadurch, daß an den Verbindungsstellen, die üblicherweise als Schweißstellen ausgeführt sind, nun eine Bewegung möglich ist, werden Lastspitzen und Sprödbrüche an dieser Stelle vermieden. Andererseits können die Stützböden durch ihren Paßsitz immer noch punktuell wirkende Lasten aus dem Walzenmantel aufnehmen und über ihren Umfang und den Achsabschnitt und die weiter mit dem Achsabschnitt verbundenen Stützböden über eine große Fläche des Walzenmantels verteilen. Auch wenn die Stützböden nicht mit dem Walzenmantel drehfest verbunden sind, können sie sich nicht flachlegen oder wandern, weil sie daran durch ihre feste Verbindung mit dem Achsabschnitt gehindert werden. Da insbesondere die inneren Stützböden den höchsten Biegemomenten ausgesetzt sind, sollten diese nicht mit dem Walzenmantel drehfest verbunden werden. Die äußeren Stützteller werden vorteilhaft mit dem Walzenmantel verbunden, um Antriebskräfte vom Nabenstummel in den Walzenmantel einleiten zu können und die innenliegenden Stützböden und Achsabschnitte gegen axialen Versatz zu sichern.

In weiterer Ausgestaltung der Erfindung werden innenliegende Achsabschnitte gegen eine Axialverschiebung gesichert, indem die außenliegenden Nabenstummel einen oder mehrere der die Stützböden miteinander verbindenden Achsabschnitte zwischen sich koaxial und etwa abstandslos einschließen.

Gemäß einer weiteren Ausgestaltung sind die äußeren Nabenstummel über Stützböden mit dem Walzenmantel drehfest verbunden, wobei die zugehörigen Nabenstummel nach außen Drehachsen für Antriebs- und Lageranschlüsse bilden. Die Nabenstummel können auf eine solche Weise kostengünstig unter Verwendung von nur wenigen Teilen montiert und zentriert werden. Es werden nur wenige Zusammenbauteile benötigt, und die Abstützung der Nabenstummel über die Stützböden erlaubt die Einleitung von Antriebskräften in den Walzenmantel genauso wie die Ableitung von Lasten, die auf den Walzenmantel einwirken, in die Lagerung der Walze.

Weitere Abwandlungen der Erfindung ergeben sich aus den übrigen Unteransprüchen. Anhand der beiliegenden Zeichnungen sei die Erfindung beispielhaft erläutert. Es zeigen:

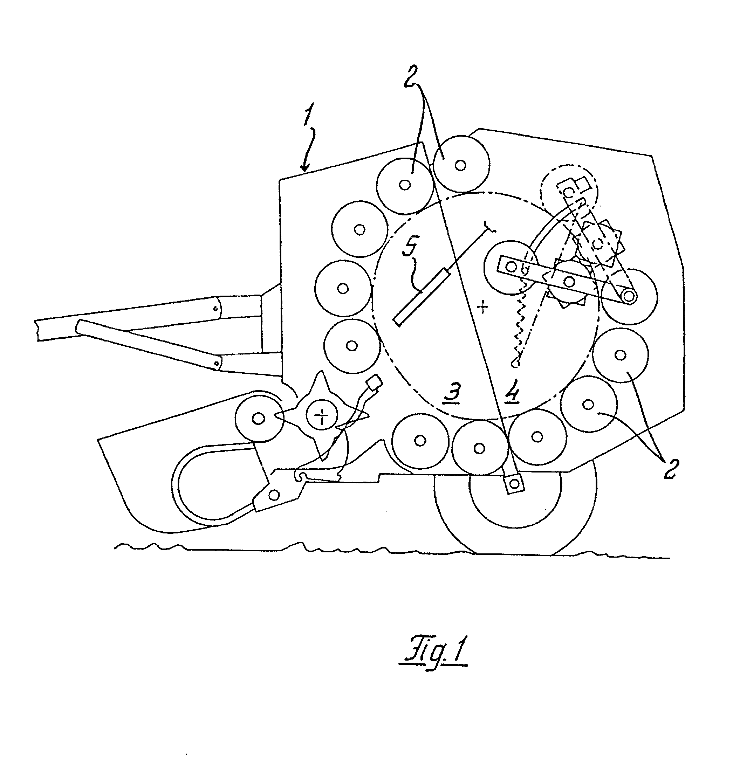

- Figur 1: die schematisierte Seitenansicht einer Rundballenpresse für landwirtschaftliches Halmgut;
- Figur 2: einen Schemaschnitt durch die erfindungsgemäß ausgebildete Walze und
- Figur 3: einen Schemaschnitt durch die erfindungsgemäße Walze nach einem weiteren Ausführungsbeispiel

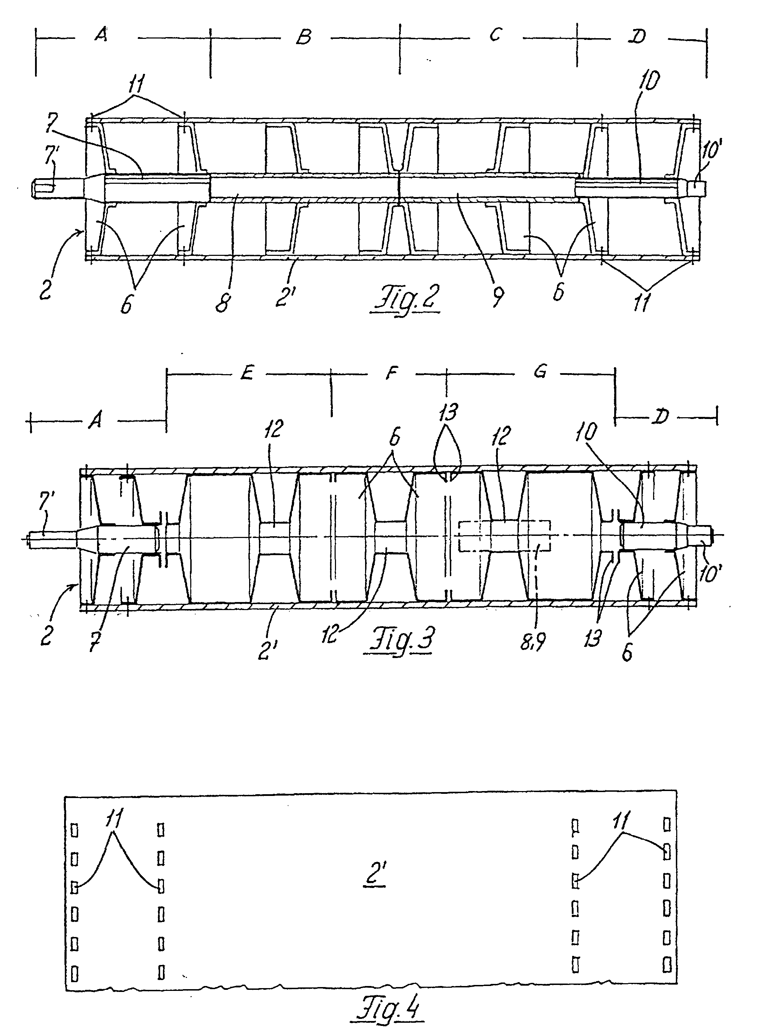

- Figur 4: eine Teilabwicklung des Mantels der Walze nach Figur 2

Mit 1 ist eine Rundballenpresse für landwirtschaftliches Halmgut bezeichnet, deren Preßraum durch kreisförmig angeordnete und angetriebene Preßwalzen 2 begrenzt sind. Von den Gehäusehälften 3 und 4 ist die hintere Hälte 4 zu Zwecken der Preßraumentleerung über einen Hydraulikzylinder 5 ausschwenkbar. Jede Preßwalze 2 ist als metallischer Hohlzylinder ausgebildet, dessen Mantel das Bezugszeichen 2' trägt. Die Wandung des Hohlzylinders kann aus einem Rohr, einem gebogenen und endseitig miteinander verbundenen Blech oder aus mehreren Schalenelementen gebildet sein. In das Walzeninnere sind mit Abstand zueinander angeordnete gepreßte Stützböden 6 mit Preßsitz eingeschoben. Die Stützböden sind, in Gruppen A-D zusammengefaßt, auf Achsabschnitten 7 bis 10 drehfest gehalten und zentriert. Nur die Stützböden 6 der Gruppen A und D sind an ihrem Umfang über Schweißungen 11 mit dem Walzenmantel 2' drehfest verbunden. Dadurch werden bei Dreh- und Biegebelastungen Spannungen im Bereich zwischen den Stützbodengruppen B; C und dem Walzenmantel 2' vermieden. Die Achsabschnitte 7 und 10 bilden nach außen hin Naben 7' und 10' für Antriebsund Lageranschlüsse. Außerdem schließen sie nach innen die Achsabschnitte 8 und 9 zwischen sich nahezu abstandslos, aber ohne Drehverbindung ein und sichern damit diese und die zugehörigen Stützbodengruppen B und C gegen Axialverschiebung. Anstelle eines zentrierenden Achsabschnitts können die Stützböden 6 auch direkt über einen oder mehrere verbindende Stützstege 12 miteinander verbunden und so auch zu Gruppen zusammengefaßt sein.

Ein diesbezügliches Ausführungsbeispiel ist in der Zeichnungsfigur 3 dargestellt. Hier ist zu erkennen, daß die Stützbodengruppen A, D, E, F, G sich über ihre endseitigen Stützböden selbst, gegen Axialverschiebung sichern. Bei diesem Lösungsvorschlag ist der Raum zwischen den Abschnitten A uund D durch insgesamt drei Stützbodengruppen E-G ausgefüllt.

Erfindungsgemäß gestaltete Preßwalzen können in ihrer äußeren Gestalt profiliert, genoppt oder in sonstiger Weise strukturiert oder beschichtet sein, ohne daß dies einen Einfluß auf das erfindungsgemäße Prinzip hätte. Sie sind in ihrer Verwendung nicht auf Rundballenpressen mit zumindest teilweiser Preßraumbegrenzung durch Walzen beschränkt, sondern können auch als Umlenkwalzen bei sogenannten Bänder-Pressen und in vielfältiger Form an anderer Stelle bei entsprechenden Belastungen in Erntemaschinen eingesetzt werden.

### Bezugszeichenliste

- 1 -: Rundballenpresse
- 2 -: Preßwalzen
- 3; 4 -: Gehäusehälften
- 5 -: Hydraulikzylinder
- 2' -: Preßwalzenmantel
- 6 -: Stützböden
- A - D -: Stützbodengruppen
- 7, 10 -: Nabenstummel
- 8, 9 -: Achsabschnitte der Stützbodengruppen
- 11 -: Schweißungen
- 7', 10' -: Drehachsen
- 12 -: Stützstege
- 13 -: Randflächen

## Patentansprüche

1. Walze (2) für Erntemaschinen, wobei die Walze (2) als Hohlzylinder ausgebildet ist, in dem mit Abstand zueinander Stützböden (6) angeordnet und endseitig Nabenstummel (7, 7', 10, 10') mit dem Hohlzylinder befestigt sind, die als Drehachse für die Walze (2) dienen,
**dadurch gekennzeichnet, dass**
mehrere der innenliegenden Stützboden (6) durch zumindest einen Achsabschnitt (8,9) miteinander verbunden und gegen seitliches Verschieben gesichert sind.

2. Walze nach Anspruch 1,
**dadurch gekennzeichnet,**
**daß** mehrere der Stützböden (6) nicht mit dem Walzenmantel (2') drehfest verbunden sind.

3. Walze nach Anspruch 1 oder 2,
**dadurch gekennzeichnet,**
**daß** die Nabenstummel (7, 10) einen oder mehrere die Stützböden (6) miteinander verbindenden Achsabschnitte (8; 9) zwischen sich koaxial und etwa abstandslos einschließen und gegen Axialverschiebung sichern.

4. Walze nach einem oder mehreren der Ansprüche 1 bis 3,
**dadurch gekennzeichnet,**
**daß** die äußeren Nabenstummel (7, 10) über Stützböden (6) mit dem Walzenmantel (2') drehfest verbunden sind, wobei die zugehörigen Nabenstummel (7; 10) nach außen Drehachsen (7'; 10') für Antriebs- und Lageranschlüsse bilden.

5. Walze (2) für Erntemaschinen, wobei die Walze (2) als Hohlzylinder ausgebildet ist, in dem mit Abstand zueinander Stützböden (6) angeordnet und endseitig Nabenstummel (7, 7', 10, 10') mit dem Hohlzylinder befestigt sind, die als Drehachse für die Walze (2) dienen,
**dadurch gekennzeichnet,**
**daß** die Stützbodengruppen im Walzeninneren wie folgt angeordnet sind:
a) die beiden im Bereich der Walzenenden angeordneten Gruppen (A; D) sind über wenigstens einen Stützboden (6) drehfest mit dem Walzenmantel verbunden;
b) zwischen den im Bereich der Walzenenden angeordneten Gruppen (A,D) ist mindestens eine Stützbodengruppe ohne kraftschlüssige Verbindung zum Walzenmantel (2') in denselben eingepaßt.
c) die endseitigen Gruppen (A,D) schließen die nicht mit dem Walzenmantel (2') in Kraftschluß stehende Stützbodengruppe oder Gruppen zwischen sich koaxial nahezu abstandslos ohne Drehverbindung zu Zwecken der Sicherung gegen Axialverschiebung ein.

6. Walze nach einem oder mehreren der Ansprüche 1 bis 5,
**dadurch gekennzeichnet,**
**daß** die zwischen den Nabenstummeln (A, D) vorhandenen Stützböden mehreren Stützbodengruppen (B, C) zugeordnet sind, die sich untereinander und an den Nabenstummeln (A, D) nahezu oder vollständig abstandslos abstützen.

7. Walze nach einem oder mehreren der Ansprüche 1 bis 6,
**dadurch gekennzeichnet,**
**daß** anstelle oder zusätzlich zu einem Achsabschnitt (8, 9) mehrere Stützböden (6) durch zumindest einen Stützsteg miteinander verbunden sind.

8. Walze nach einem oder mehreren der Ansprüche 1 bis 7,
**dadurch gekennzeichnet,**
**daß** die gegenseitige Abstützung der Stützbodengruppen A - D an äußeren Randflächen (13) zweier sich endseitig gegenüberstehender Stützböden erfolgt.

## Claims

1. A roller (2) for harvesters, wherein the roller (2) is in the form of a hollow cylinder in which support plates (6) are arranged at mutual spacings and fixed to the hollow cylinder at the ends are hub stubs (7, 7', 10, 10') which serve as the axis of rotation for the roller (2), **characterised in that** a plurality of the inwardly disposed support plates (6) are connected together by at least one shaft portion (8, 9) and are secured against lateral displacement.

2. A roller according to claim 1 **characterised in that** a plurality of the support plates (6) are not non-rotatably connected to the roller shell (2').

3. A roller according to claim 1 or claim 2 **characterised in that** the hub stubs (7, 10) enclose between them coaxially and substantially without spacing one or more shaft portions (8; 9) connecting the support plates (6) together and secure them against axial displacement.

4. A roller according to one or more of claims 1 to 3 **characterised in that** the outer hub stubs (7, 10) are non-rotatably connected to the roller shell (2') by way of support plates (6), wherein the associated hub stubs (7' 10) form towards the exterior rotary axis members (7'; 10') for drive and bearing connections.

5. A roller (2) for harvesters, wherein the roller (2) is in the form of a hollow cylinder in which support plates (6) are arranged at mutual spacings and fixed to the hollow cylinder at the ends are hub stubs (7, 7', 10, 10') which serve as the axis of rotation for the roller (2), **characterised in that** the support plate groups are arranged in the interior of the roller as follows:
a) the two groups (A; D) arranged in the region of the ends of the roller are non-rotatably connected to the roller shell by way of at least one support plate (6);
b) between the groups (A, D) arranged in the region of the ends of the roller at least one group of support plates is fitted into the roller shell (2') without force-locking connection with respect thereto, and
c) the end groups (A, D) enclose the support plate group or groups which are not force-lockingly connected to the roller shell (2') between them coaxially and virtually without spacing without a rotary connection for the purposes of securing same against axial displacement.

6. A roller according to one or more of claims 1 to 5 **characterised in that** the support plates between the hub stubs (A, D) are associated with a plurality of support plate groups (B, C) which are supported in relation to each other and at the hub stubs (A, D) almost or entirely without a spacing.

7. A roller according to one or more of claims 1 to 6 **characterised in that** instead of or in addition to a shaft portion (8, 9) a plurality of support plates (6) are connected together by at least one support leg.

8. A roller according to one or more of claims 1 to 7 **characterised in that** the mutual support of the support plate groups (A-D) occurs at the outer edge surfaces (13) of two support plates which are in opposite relationship at their ends.

## Revendications

1. Rouleau (2) pour machines de récolte, le rouleau (2) étant conformé en cylindre creux, dans lequel des plaques-supports (6) sont disposées à distance les unes des autres et des bouts d'axe (7, 7', 10, 10') sont fixés au cylindre creux, côté extrémité, et servent d'axe de rotation pour le rouleau (2), **caractérisé en ce que** plusieurs des plaques-supports (6) situées à l'intérieur sont liées entre elles par au moins une portion d'axe (8, 9) et sont immobilisées en translation.

2. Rouleau selon la revendication 1, **caractérisé en ce que** plusieurs des plaques-supports (6) ne sont pas solidaires en rotation de l'enveloppe de rouleau (2').

3. Rouleau selon la revendication 1 ou 2, **caractérisé en ce que** les bouts d'axe (7, 9) entourent de manière coaxiale et pratiquement sans espace une ou plusieurs portions d'axe (8, 9) reliant les plaques-supports (6) les unes aux autres et les immobilisent en translation.

4. Rouleau selon une ou plusieurs des revendications 1 à 3, **caractérisé en ce que** les bouts d'axe (7, 10) extérieurs sont liés en rotation à l'enveloppe de rouleau (2') par l'intermédiaire de plaques-supports (6), les bouts d'axe (7; 10) associés formant côté extérieur des axes de rotation (7', 10') pour des moyens d'entraînement et des moyens formant paliers.

5. Rouleau (2) pour machine de récolte, le rouleau (2) étant conformé en cylindre creux dans lequel des plaques-supports (6) sont disposées à distance les unes des autres et des bouts d'axe (7, 7', 10, 10') servant d'axe de rotation pour le rouleau (2) sont fixés au cylindre creux, côté extrémités, **caractérisé en ce que** les groupes de plaques-supports à l'intérieur du rouleau sont disposés de la manière suivante:
a) les deux groupes (A; D) disposés dans la région des extrémités de rouleau sont liés en rotation à l'enveloppe de rouleau par l'intermédiaire d'au moins une plaque-support (6);
b) entre les groupes (A; D) disposés dans la région des extrémités de rouleau est inséré au moins un groupe de plaques-supports sans liaison par adhérence avec l'enveloppe de rouleau (2');
c) les groupes d'extrémité (A; D) enserrent le ou les groupe(s) de plaques-supports qui ne sont pas liés par adhérence à l'enveloppe de rouleau (2'), de manière coaxiale, pratiquement sans espace et sans liaison en rotation, à des fins d'immobilisation en translation.

6. Rouleau selon une ou plusieurs des revendications 1 à 5, **caractérisé en ce que** les plaques-supports disposées entre les bouts d'axe (A, D) sont associées à plusieurs groupes de plaques-supports (B, C) qui prennent appui les unes sur les autres et sur les bouts d'axe (A, D) presque ou totalement sans espace.

7. Rouleau selon une ou plusieurs des revendications 1 à 6, **caractérisé en ce qu'**à la place ou en complément d'un tronçon d'axe (8, 9) plusieurs plaques-supports (6) sont reliées les unes aux autres par au moins une barrette support.

8. Rouleau selon une ou plusieurs des revendications 1 à 7, **caractérisé en ce que** l'appui réciproque des groupes de plaques-supports (A, D) a lieu au niveau de surfaces de bord (13) extérieures de deux plaques-supports disposées en vis-à-vis.
